(19) Europäisches Patentamt
European Patent Office
Office européen des brevets

(11) EP 3 385 313 A1

(12) **EUROPEAN PATENT APPLICATION**
published in accordance with Art. 153(4) EPC

(43) Date of publication:
**10.10.2018 Bulletin 2018/41**

(21) Application number: **16870793.3**

(22) Date of filing: **01.12.2016**

(51) Int Cl.:
***C08J 5/18*** *(2006.01)* ***B65D 65/46*** *(2006.01)*
***C08L 29/04*** *(2006.01)* ***C08L 51/00*** *(2006.01)*
***C08L 51/08*** *(2006.01)* ***C08L 101/14*** *(2006.01)*
***C08F 271/00*** *(2006.01)* ***C08F 283/06*** *(2006.01)*

(86) International application number:
**PCT/JP2016/085785**

(87) International publication number:
**WO 2017/094856 (08.06.2017 Gazette 2017/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.12.2015 JP 2015236063**

(71) Applicant: **Nippon Shokubai Co., Ltd.**
**Osaka-shi, Osaka 541-0043 (JP)**

(72) Inventors:
- **MICHITAKA, Daisuke**
  **Suita-shi**
  **Osaka 564-8512 (JP)**
- **MIZOGUCHI, Hirotaka**
  **Suita-shi**
  **Osaka 564-8512 (JP)**

(74) Representative: **Cabinet Beau de Loménie**
**158, rue de l'Université**
**75340 Paris Cedex 07 (FR)**

(54) **WATER-SOLUBLE FILM AND MANUFACTURING METHOD THEREFOR**

(57) The present invention provides a water-soluble film having high solubility in cold water and high extensibility. The present invention also provides a method for simply producing such a water-soluble film with particularly preferred features. The present invention relates to a water-soluble film including a grafted polymer and a water-soluble resin, and also relates to a water-soluble film including a grafted polymer. The present invention also relates to a method for producing a water-soluble film containing a grafted polymer and a water-soluble resin including mixing the grafted polymer and the water-soluble resin.



Printed by Jouve, 75001 PARIS (FR)

**Description**

TECHNICAL FIELD

The present invention relates to a water-soluble film and a method for producing the water-soluble film.

BACKGROUND ART

Recently, detergents or chemicals such as agrochemicals are hermetically-packaged (unit-packaged) with a water-soluble film in certain amounts and the packaged products are directly put into water for the convenience of the consumer and the safe use by the consumer. As the water-soluble film dissolves in water, the contents are released. Thus, the effects of the contents are obtained. Such a technique is quite useful in the packaging field because it enables the use of the contents without direct touching and eliminates the measure of the amount of the contents and disposal of the package films.

Water-soluble films are typically made of a partially saponified polyvinyl alcohol-based polymer (also referred to as PVA) in view of water solubility and strength. However, films made of PVA are poor in properties such as solubility in cold water. In order to solve such a problem, a technique of partial anionic modification of PVA or introduction of a water-soluble monomer into PVA by copolymerization has been proposed (see, for example, Patent Documents 1 to 5). In addition to these, water-soluble films made of PVA for packaging chemicals or detergents, for example, are also disclosed (see, for example, Patent documents 6 to 9).

CITATION LIST

- Patent Document

Patent Document 1: JP 2007-70493 A
Patent Document 2: JP 2001-206435 A
Patent Document 3: JP H09-324096 A
Patent Document 4: JP 2002-3896 A
Patent Document 5: JP 3262406 B
Patent Document 6: JP 3135066 B
Patent Document 7: US 2013/0256182
Patent Document 8: JP S53-24351 A
Patent Document 9: US 2004/0219297


SUMMARY OF INVENTION

- Technical Problem

Various proposals have been made for improving the physical properties of a film made of PVA as described above. However, these methods are not enough to provide sufficient solubility in water (water solubility), particularly in cold water (for example, having a temperature of 0°C to 15°C), and films showing a high dissolution rate even in cold water have not yet been obtained. There are also the following problems: reduction in film strength due to partial anionic modification of PVA or introduction of a water-soluble monomer and possible formation of a salt and precipitation thereof when a film is put into hard water.

The present invention has been made in view of the state of the art, and aims to provide a water-soluble film having high solubility in cold water and high extensibility. The present invention also aims to provide a method for simply producing such a water-soluble film with particularly preferred features.

- Solution to Problem

The present inventors made various examinations on a water-soluble film and found that a water-soluble film containing a grafted polymer has more sufficient solubility in water, particularly in cold water, compared to conventional water-soluble films, and also has extensibility. These effects are further exerted particularly in the case where the water-soluble film additionally contains a water-soluble resin such as a polyvinyl alcohol-based polymer or in the case where the grafted polymer has a main chain or a branched chain having a predetermined structure. The present inventors also

found that such a water-soluble film has sufficient strength and can exhibit hard water resistance, deodorant properties, dispersibility of inorganic particles, anti-soil redeposition properties, and detergency. The present inventors also found that the water-soluble film further exhibiting the above effects can be simply and readily obtained by a production method that includes mixing (blending) a grafted polymer and a water-soluble resin. As a result, the above-mentioned problems have been admirably solved, leading to completion of the present invention.

That is, one aspect of the present invention relates to a water-soluble film including:

a grafted polymer; and
a water-soluble resin.

The water-soluble film preferably further includes a water-soluble resin.

The grafted polymer preferably has a polyalkylene glycol chain and/or a vinyl lactam unit in a backbone.

The grafted polymer preferably has an anionic group and/or a lactam group in a branched chain. The anionic group is preferably a carboxyl group and/or a salt thereof.

Another aspect of the present invention relates to a composition including:

a grafted polymer; and
a water-soluble resin.

Another aspect of the present invention relates to a method for producing a water-soluble film containing a grafted polymer and a water-soluble resin, the method including mixing the grafted polymer and the water-soluble resin.

Another aspect of the present invention relates to a packaged product including the water-soluble film of the present invention and a chemical and/or a detergent packaged with the water-soluble film.

Another aspect of the present invention relates to a method for producing a packaged product, the method including packaging a chemical and/or a detergent with the water-soluble film of the present invention.

Another aspect of the present invention relates to a packaging method including packaging a chemical and/or a detergent with the water-soluble film of the present invention.

- Advantageous Effects of Invention

The water-soluble film of the present invention has high solubility in water, particularly in cold water, and high extensibility, and is therefore useful for various uses such as packaging materials. The composition of the present invention may be used for simply producing the water-soluble film of the present invention. The packaged product of the present invention is very useful when it is directly put into water and the contents are used as a chemical or a detergent. The method for producing a water-soluble film of the present invention is capable of simply and readily providing such a water-soluble film with particularly preferred features, and is therefore useful particularly in the technical field of packaging materials, for example. The method for producing a packaged product of the present invention is capable of simply providing such a packaged product. The packaging method of the present invention is capable of simply packaging a chemical and/or a detergent.

## DESCRIPTION OF EMBODIMENTS

Preferred embodiments of the present invention are described in detail below, but the present invention is not limited thereto. The preferred embodiments may be appropriately altered within the scope of the present invention. Combinations of two or three or more of the below-described preferred embodiments of the present invention are also preferred embodiments of the present invention.

[Water-soluble film]

The water-soluble film of the present invention contains a grafted polymer and a water-soluble resin. The water-soluble film of the present invention may contain only a grafted polymer as an essential component. For example, the water-soluble film may consist only of a grafted polymer. Such a water-soluble film containing a grafted polymer is also one aspect of the present invention. The water-soluble film may optionally contain a different component, as needed. The water-soluble film may contain one or two or more types of each of the components.

The water-soluble film preferably mainly includes a water-soluble resin and a grafted polymer. The phrase "the water-soluble film mainly includes a water-soluble resin and a grafted polymer" means that the proportion by mass of the water-soluble resin and the proportion by mass of the grafted polymer are both larger than the proportion(s) by mass of the component(s) other than the grafted polymer and the water-soluble resin. Here, the water-soluble film may consist

only of a water-soluble resin and a grafted polymer. The blending ratio by mass between the water-soluble resin and the grafted polymer (water-soluble resin/grafted polymer) is preferably (1 to 99)/(99 to 1), for example. In terms of the balance between the film strength and the solubility in cold water, the proportion of the water-soluble resin is preferably 1% by mass or more, more preferably 10% by mass or more, still more preferably 20% by mass or more, further more preferably 30% by mass or more, still further more preferably 40% by mass or more, particularly preferably 50% by mass or more, more particularly preferably 60% by mass or more of 100% by mass of the total amount of the water-soluble resin and the grafted polymer (a larger value is better). The proportion of the water-soluble resin is preferably 99% by mass or less, more preferably 98% by mass or less, still more preferably 95% by mass or less (a smaller value is better).

In other words, the proportion of the grafted polymer is preferably 1% by mass or more, more preferably 2% by mass or more, still more preferably 5% by mass or more of 100% by mass of the total amount of the water-soluble resin and the grafted polymer (a larger value is better). The proportion of the grafted polymer is preferably 99% by mass or less, more preferably 90% by mass or less, still more preferably 80% by mass or less, further more preferably 70% by mass or less, still further more preferably 60% by mass or less, particularly preferably 50% by mass or less, more particularly preferably 40% by mass or less (a smaller value is better).

The thickness of the water-soluble film may be appropriately set in accordance with factors such as its uses, and is preferably, but not limited to, 5 to 300 μm in terms of the balance between the film strength and the solubility of the film in cold water, for example. The thickness is more preferably 6 to 200 μm, still more preferably 7 to 150 μm, further preferably 8 to 100 μm, particularly preferably 9 to 90 μm, most preferably 10 to 80 μm.

When the water-soluble film has a thickness of 40 μm, the dissolution time thereof in cold water having a temperature of 6°C is preferably 5 to 240 seconds, more preferably 6 to 200 seconds, still more preferably 7 to 180 seconds, further more preferably 8 to 160 seconds, still further more preferably 9 to 140 seconds, particularly preferably 10 to 120 seconds, most preferably 15 to 100 seconds. A film dissolving too quickly (the dissolution time is too short) may have high moisture absorbency and may fail to sufficiently keep the film shape under usual storage conditions due to moisture in the air. A film dissolving too slowly (the dissolution time is too long) may fail to more efficiently release chemicals.

The dissolution time (in the case of 40 μm) may be determined based on the solubility evaluation method described in the Examples below.

The water-soluble film also preferably has an extensibility of 23% or higher. The film having an extensibility of 23% or higher may have excellent load capacity, and may be useful as a material for packaging a chemical or a detergent. The extensibility is more preferably 25% or higher, still more preferably 30% or higher.

The extensibility may be determined based on the extensibility evaluation method described in the Examples below.

The water-soluble film also preferably has a hard water resistance of 94% or higher. The film having hard water resistance of 94% or higher may not cause precipitation or turbidity of water when the film is put into hard water. On the other hand, in the case of a film having hard water resistance of lower than 94%, it is difficult to more sufficiently suppress the formation of a salt and precipitation thereof and the turbidity of water when the film is put into hard water. The hard water resistance is more preferably 95% or higher, still more preferably 96% or higher, particularly preferably 97% or higher.

The hard water resistance may be determined based on the hard water resistance evaluation method described in the Examples below.

When the water-soluble film has a thickness of 40 μm, the film preferably has a strength of 0.05 J or higher. The film having a strength of 0.05 J or higher may stably maintain the packaging of chemicals or detergents, for example. The strength is more preferably 0.08 J or higher, still more preferably 0.1 J or higher.

The film strength (in the case of 40 μm) may be determined based on the strength evaluation method described in the Examples below.

The following describes the grafted polymer, the water-soluble resin, and other suitable components in the water-soluble film.

<Grafted polymer>

The grafted polymer has only to be one prepared by graft-polymerizing one or two or more monomers onto the backbone polymer. The grafted polymer preferably has a polyalkylene glycol chain and/or a vinyl lactam unit in a backbone. The effects of the present invention can be more sufficiently achieved by the use of such a grafted polymer. Further, the grafted polymer preferably has an anionic group and/or a lactam group in a branched chain. More preferably, the structure of the grafted polymer satisfies one or both of the followings: (i) a structure having a polyalkylene glycol chain in a backbone and an anionic group and/or a lactam group in a branched chain; and (ii) a structure having a vinyl lactam unit in a backbone and an anionic group in a branched chain.

The weight average molecular weight (Mw) of the grafted polymer is preferably, but not limited to, 2000 to

200,000, for example, in order to more increase the film strength and the solubility. The weight average molecular weight is more preferably 3000 or more, still more preferably 5000 or more, and the weight average molecular weight is more preferably 150,000 or less, still more preferably 100,000 or less, particularly preferably 50,000 or less.

The weight average molecular weight of the grafted polymer is a value determined by gel permeation chromatography (GPC) and may be measured under the measurement conditions described in the Examples below.

A grafted polymer having the structure (i) can be suitably prepared by a production method including graft-polymerizing a monomer component that contains an anionic group-containing monomer and/or a vinyl lactam-based monomer onto a polyalkylene glycol chain-containing polymer as the backbone polymer, for example. The amounts of the anionic group-containing monomer and the vinyl lactam-based monomer to be grafted are not limited. In terms of the balance between the film strength and the solubility in cold water, for example, the amount of the anionic group-containing monomer used is preferably 1 to 90 parts by weight, more preferably 3 to 80 parts by weight, still more preferably 5 to 70 parts by weight based on 100 parts by weight of the polyalkylene glycol chain-containing polymer. In terms of the same point, the amount of the vinyl lactam-based monomer used is preferably 1 to 90 parts by weight, more preferably 3 to 70 parts by weight, still more preferably 5 to 50 parts by weight based on 100 parts by weight of the polyalkylene glycol chain-containing polymer.

A grafted polymer having the structure (ii) can be suitably prepared by a production method including graft-polymerizing a monomer component that contains an anionic group-containing monomer onto a vinyl lactam unit-containing polymer as the backbone polymer, for example. The amount of the anionic group-containing monomer to be grafted is preferably, but not limited to, 0.5 to 90 parts by weight, more preferably 1 to 50 parts by weight, still more preferably 3 to 10 parts by weight based on 100 parts by weight of the vinyl lactam unit-containing polymer in terms of the balance between the film strength and the solubility in cold water, for example.

Here, for each of the material components (e.g. backbone polymer, material monomers that constitute the backbone polymer, and monomers providing a branched chain), one or two or more thereof may be used. The following further describes the material components and the graft polymerization step.

(Material components, etc.)

1) Backbone polymer

1-1) Polyalkylene glycol chain-containing polymer

The polyalkylene glycol chain-containing polymer is a compound containing one or two or more alkylene glycol groups (also referred to as oxyalkylene groups) as a constituent unit. The oxyalkylene group is preferably, but not limited to, a C2-C18 oxyalkylene group, more preferably a C2-C8 oxyalkylene group, still more preferably a C2-C4 oxyalkylene group, particularly preferably a C2 oxyalkylene group, that is, an oxyethylene group, for example.

The polyalkylene glycol chain-containing polymer preferably contains an oxyethylene group as described above. In particular, the polyalkylene glycol chain of the polyalkylene glycol chain-containing polymer is preferably formed mainly of an oxyethylene group. Here, the term "mainly" means that the oxyethylene group accounts for the most part of all the oxyalkylene groups constituting the polyalkylene glycol chain. This can promote the grafting reaction onto the polyalkylene glycol chain-containing polymer in the polymerization and provide an effect of more enhancing properties such as solubility in water. Specifically, the oxyethylene group is preferably 50 to 100 mol%, more preferably 60 mol% or more, still more preferably 80 mol% or more, particularly preferably 90 mol% or more, most preferably 100 mol% of 100 mol% of all the oxyalkylene groups that constitute the polyalkylene glycol chain.

When the polyalkylene glycol chain includes two or more oxyalkylene groups, these two or more oxyalkylene groups may be added randomly, in block, or alternately, for example.

The average number of repeating alkylene oxide units in the polyalkylene glycol chain, that is, the average number of moles of oxyalkylene groups added is preferably, but not limited to, 2 to 300. The lower limit thereof is more preferably 3 or more, still more preferably 5 or more, particularly preferably 10 or more, most preferably 15 or more. The upper limit thereof is more preferably 200 or less, still more preferably 150 or less, particularly preferably 100 or less, most preferably 80 or less.

The average number of moles of oxyalkylene groups added means a mean value of the number of moles of alkylene oxide units (oxyalkylene groups) added to 1 mol of the polyalkylene glycol chain of the polyalkylene glycol chain-containing polymer.

The proportion of the polyalkylene glycol chain in the polyalkylene glycol chain-containing polymer is preferably 20% by mass or more, more preferably 30% by mass or more of 100% by mass of the polyalkylene glycol chain-containing polymer in terms of grafting efficiency, for example.

The polyalkylene glycol chain-containing polymer is preferably a compound having a structure represented by the following formula (1):

$$R\{X_p\text{-}Y\text{-}Z_q\text{-}OH)_r \qquad (1)$$

wherein R represents a hydrogen atom, a C1-C30 aryl group, a C1-C30 alkyl group, or a C1-C30 alkenyl group; X represents a carbonyl group or a phenylene group; p is 0 or 1; Y represents a $-O-R^1-$ group, a $-S-R^2-$ group, a $-(O=)S(=O)-R^3-$ group, or a $-N(-R^5)-R^4-$ group, in which $R^1$, $R^2$, $R^3$, and $R^4$ are the same as or different from each other and each represent a C2-C6 alkylene group and $R^5$ represents a hydrogen atom, a C1-C30 alkyl group, or $-R^6-(O-R^7)_s-OH$ where $R^6$ and $R^7$ are the same as or different from each other and each represent a C2-C6 alkylene group and s is 0 to 100; Z represents one or two or more oxyalkylene groups; q is 1 to 300; and r is an integer of 1 to 6.

In the formula (1), R represents a hydrogen atom, a C1-C30 aryl group, a C1-C30 alkyl group, or a C1-C30 alkenyl group, preferably represents a hydrogen atom, an alkyl group, or an alkenyl group, in particular. The alkyl group and the alkenyl group may be linear, branched, or cyclic. As long as the aryl group, the alkyl group, and the alkenyl group each contain 1 to 30 carbon atoms, they each may contain any substituent. The number of carbon atoms of each of the aryl group, the alkyl group, and the alkenyl group is preferably 1 to 18, more preferably 1 to 13.

$R^1$, $R^2$, $R^3$, and $R^4$ in the above groups represented by Y are the same as or different from each other and each represent a C2-C6 alkylene group. $R^6$ and $R^7$ in the above group represented by $R^5$ are the same as or different from each other and each represent a C2-C6 alkylene group. The number of carbon atoms of the alkylene group is preferably 2 to 6, more preferably 2 to 4, still more preferably 2 or 3, particularly preferably 2. The symbol s is 0 to 100, preferably 0 to 70, more preferably 0 to 55, still more preferably 0 to 50, particularly preferably 0 to 30. When s is 2 or greater, one type of $R^7$ may be present alone or two or more types of $R^7$s may be mixed. Y is particularly preferably a $-O-R^1-$ group.

Z represents an oxyalkylene group. Preferred features of the oxyalkylene group are as described above. The symbol q represents the average number of moles of an oxyalkylene group added represented by Z, and preferred range thereof is also as described above.

The symbol r is an integer of 1 to 6. The cases where r is 2 or greater means that in the polyalkylene glycol chain-containing polymer represented by the formula (1), the r number of groups represented by the parentheses are directly bonded to R. The symbol r is preferably 1 to 4, more preferably 1 or 2, still more preferably 1.

In the present invention, the polyalkylene glycol chain-containing polymer may be a commercially available product, or may be one prepared in-house. Examples of the commercial product include SOFTANOL (registered trademark) M series (produced by Nippon Shokubai Co., Ltd.) and NEWCOL series of non-ionic surfactants (produced by Nippon Nyukazai Co., Ltd.).

The method for in-house preparation may be, but is not limited to, a method in which an alkylene oxide is polymerized (added) in the presence of a compound as a polymerization initiation point as disclosed in JP 2007-254679 A (see [0043]) or JP 2013-40279 A (see [0012] and [0013]), for example. The compound as a polymerization initiation point is preferably one or two or more of water, alcohols, ammonia, and amines. In particular, water, an alcohol, and/or an amine are/is more preferred.

The polyalkylene glycol chain-containing polymer may also be one prepared by reacting at least one terminal hydroxy group of a compound obtained in the above polymerization with a compound containing a group such as a carboxyl, ester, isocyanate, amino, or halogen group.

The molecular weight of the polyalkylene glycol chain-containing polymer is not limited, and for example, the number average molecular weight (Mn) thereof is preferably 100 or more. Thus, the graft rate is enhanced. The Mn is more preferably 200 or more, still more preferably 300 or more. The upper limit of the number average molecular weight is preferably, but not limited to, 100,000 or less, more preferably 50,000 or less, still more preferably 10,000 or less in terms of viscosity.

1-2) Vinyl lactam unit-containing polymer

The vinyl lactam unit-containing polymer (also referred to as a N-vinyl lactam unit-containing polymer) is a compound containing one or two or more lactam groups (also referred to as lactam ring structures) as a constituent unit. Preferred examples of the lactam group include, but are not limited to, $\alpha$-lactam, $\beta$-lactam, $\gamma$-lactam, and $\sigma$-lactam groups. Preferred among these is a $\gamma$-lactam group (pyrrolidone group).

The vinyl lactam unit-containing polymer may be a commercially available product, or may be one prepared in-house. Examples of the commercial product include polyvinyl pyrrolidone produced by Nippon Shokubai Co., Ltd. The in-house preparation may be performed by any method, and may be performed by homopolymerization or copolymerization of a monomer component(s) that includes a compound containing at least one unsaturated double bond (carbon-carbon double bond) and at least one lactam group (also referred to as a vinyl lactam-based monomer) in one molecule, for example.

Preferred examples of the vinyl lactam-based monomer include N-vinylpyrrolidone, N-vinylcaprolactam, N-vinyl-4-butylpyrrolidone, N-vinyl-4-propylpyrrolidone, N-vinyl-4-ethylpyrrolidone, N-vinyl-4-methylpyrrolidone, N-vinyl-4-methyl-5-ethylpyrrolidone, N-vinyl-4-methyl-5-propylpyrrolidone, N-vinyl-5-methyl-5-ethylpyrrolidone, N-vinyl-5-propylpyrrolidone, N-vinyl-5-butylpyrrolidone, N-vinyl-4-methylcaprolactam, N-vinyl-6-methylcaprolactam, N-vinyl-6-propylcaprolactam, and N-vinyl-7-butylcaprolactam. In particular, N-vinylpyrrolidone and/or N-vinylcaprolactam are/is preferred because they are highly polymerizable.

When the vinyl lactam unit-containing polymer is a copolymer of a vinyl lactam-based monomer and a different monomer, the different monomer is not limited, and one or two or more of the monomers listed as graft components (monomers to be grafted) below that constitute a branched chain may be used as the different monomer. Preferred examples thereof include the anionic group-containing monomers described below; fatty acid esters such as vinyl acetate; unsaturated carboxylic acid esters such as (meth)acrylic acid esters and maleic acid esters; aromatic compounds such as styrene; nitriles such as acrylonitrile; ethers such as alkyl vinyl ethers; N-vinyl imidazole; vinyl pyridine; allyl alcohol; and olefins. More preferred is vinyl acetate. Examples of the esters include, but are not limited to, C1-C20 alkyl esters, dimethylamino alkyl esters and quaternary salts thereof, and hydroxyalkyl esters.

The proportion of the vinyl lactam unit (N-vinyl lactam unit) in the vinyl lactam unit-containing polymer is, for example, preferably 20% by mass or more, more preferably 30% by mass or more, still more preferably 50% by mass or more of 100% by mass of the vinyl lactam unit-containing polymer in terms of grafting efficiency.

2) Graft component

2-1) Anionic group-containing monomer

The anionic group-containing monomer is a compound that contains at least one unsaturated double bond (carbon-carbon double bond) and at least one anionic group in one molecule. Examples of the anionic group include carboxyl, sulfonic acid, phosphoric acid, carbonic acid, silicic acid, phosphonic acid, nitric acid, and sulfuric acid groups. The anionic group may be in the form of a salt, and an anionic salt group shall be encompassed in the anionic group. In the present invention, a carboxyl group and/or a carboxylic acid salt (also collectively referred to as carboxylic acid (salt) group) are/is preferred in order to obtain more excellent solubility in cold water.

Preferred as the anionic group-containing monomer is/are one or two or more carboxylic acid-based monomers containing a carboxylic acid (salt) group; sulfonic acid-based monomers containing a sulfonic acid group and/or a sulfonic acid salt (also collectively referred to as sulfonic acid (salt) group); and phosphoric acid-based monomers containing a phosphoric acid (salt) group, for example. More preferred are/is a carboxylic acid-based monomer and/or a sulfonic acid-based monomer. Still more preferred is a carboxylic acid-based monomer.

Here, obviously, a monomer containing two or more types of anionic groups in one molecule may be used as the anionic group-containing monomer.

The carboxylic acid-based monomer is a compound that contains an unsaturated double bond (carbon-carbon double bond) and a carboxylic acid (salt) group. In particular, preferred are an unsaturated monocarboxylic acid-based monomer containing an unsaturated double bond and one carboxylic acid (salt) group in one molecule and an unsaturated dicarboxylic acid-based monomer containing an unsaturated double bond and two carboxylic acid (salt) groups in one molecule.

Here, the carboxylic acid salt is preferably a metal salt, an ammonium salt, or an organic amine salt. Examples of the metal atom of the metal salt include monovalent metals such as sodium, lithium, potassium, rubidium, and cesium; divalent metals such as magnesium, calcium, strontium, and barium; trivalent metals such as aluminum; and other metals such as iron. Examples of the organic amine group of the organic amine salt include alkanol amine groups such as a monoethanolamine group, a diethanolamine group, and a triethanolamine group; alkylamine groups such as a monoethyl amine group, a diethyl amine group, and a triethylamine group; and polyamine groups such as an ethylenediamine group and a triethylenediamine group. Preferred among the above-described salts are an ammonium salt, a sodium salt, and a potassium salt, and more preferred is a sodium salt.

Examples of the unsaturated monocarboxylic acid-based monomer include unsaturated monocarboxylic acids such as (meth)acrylic acid, crotonic acid, $\alpha$-hydroxyacrylic acid, $\alpha$-hydroxymethylacrylic acid, and derivatives thereof, and salts thereof. The acrylic acids and the methacrylic acids are collectivly referred to as "(meth)acrylic acids".

Examples of the unsaturated dicarboxylic acid-based monomer include unsaturated dicarboxylic acids such as maleic acid, itaconic acid, citraconic acid, fumaric acid, mesaconic acid, and 2-methylene glutaric acid, and salts and anhydrides thereof. Further, a half ester of the unsaturated dicarboxylic acid-based monomer and an alcohol (e.g. a C1-C22 alcohol), a half amide of the unsaturated dicarboxylic acid-based monomer and an amine (e.g. a C1-C22 amine), a half ester of the unsaturated dicarboxylic acid-based monomer and a glycol (e.g. a C2-C4 glycol), or a half amide of a maleamic acid and a glycol (e.g. a C2-C4 glycol) may be used.

Preferred among the carboxylic acid-based monomers are/is (meth)acrylic acid, maleic acid, and/or a salt thereof. More preferred are/is (meth)acrylic acid and/or a salt thereof. Thus, a water-soluble film having better solubility

in cold water and strength can be obtained. Still more preferred are/is acrylic acid and/or a salt thereof.

The sulfonic acid-based monomer is a compound that contains an unsaturated double bond (carbon-carbon double bond) and a sulfonic acid (salt) group. The sulfonic acid salt is preferably a metal salt, an ammonium salt, or an organic amine salt. Examples of the metal atom and the organic amine group include those described above. The sulfonic acid salt is preferably an ammonium salt, a sodium salt, or a potassium salt, more preferably a sodium salt.

Specific examples of the sulfonic acid-based monomer include unsaturated sulfonic acids such as vinylsulfonic acid, styrenesulfonic acid, (meth)allylsulfonic acid, 3-(meth)allyloxy-2-hydroxypropanesulfonic acid, 3-(meth)allyloxy-1-hydroxypropanesulfonic acid, 2-(meth)allyloxyethylenesulfonic acid, 2-acrylamido-2-methylpropanesulfonic acid, (meth)allyloxybenzenesulfonic acid, isoprenesulfonic acid, 2-methylpropanesulfonic acid (meth)acrylamide, 2-hydroxy-3-allyloxysulfonic acid, sulfoethyl (meth)acrylate, sulfopropyl (meth)acrylate, and sulfobutyl (meth)acrylate and salts thereof.

The sulfonic acid-based monomer is particularly preferably a compound represented by the following formula (2) in terms of economic efficiency and structural stability. The compound can be obtained according to the method disclosed in JP 5558357 B, for example.

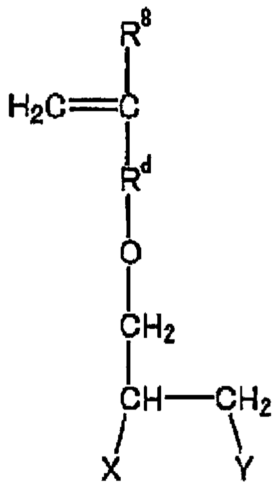

(2)

In the formula, $R^8$ represents a hydrogen atom or a $CH_3$ group; $R^d$ represents a $CH_2$ group, a $CH_2CH_2$ group, or a direct bond; and X and Y are the same as or different from each other and each represent a hydroxy group or a sulfonic acid (salt) group where one or both of X and Y represent a sulfonic acid (salt) group.

In the formula (2), $R^8$ represents a hydrogen atom or a $CH_3$ group, preferably a hydrogen atom; $R^d$ represents a $CH_2$ group, a $CH_2CH_2$ group, or a direct bond, preferably a $CH_2$ group. X and Y are the same as or different from each other and each represent a hydroxy group or a sulfonic acid (salt) group, and preferably, one of X and Y represents a sulfonic acid (salt) group, and the other represents a hydroxy group.

2-2) Vinyl lactam-based monomer

The vinyl lactam-based monomer is a compound that contains at least one unsaturated double bond (carbon-carbon double bond) and at least one lactam group in one molecule. Specific examples and preferred features of the lactam group and the vinyl lactam-based monomer are as described above.

2-3) Different monomer

The different monomer may be any monomer copolymerizable with an anionic group-containing monomer and/or a vinyl lactam-based monomer. Examples thereof include fatty acid esters such as vinyl acetate; unsaturated carboxylic acid esters such as (meth)acrylic acid esters and maleic acid esters; aromatic compounds such as styrene; nitriles such as acrylonitrile; ethers such as alkyl vinyl ethers; N-vinyl imidazole; vinyl pyridine; allyl alcohol; and olefins. Specifically, the different monomer may be one or two or more compounds not corresponding to the preferred graft components in the present invention among the compounds disclosed in JP 2007-254679 A (see [0045] and [0046]), JP 2009-256656 A (see [0044] and [0045]), WO 2008/020556 (see [0021] and [0022]), JP 2013-40279 A (see [0030]), and JP 2001-278922 A (see [0010]).

(Graft polymerization step)

The graft polymerization step is a step of graft-polymerizing the above-described graft component onto the backbone polymer. The backbone polymer and the graft component (monomer) each may be added concurrently or successively. The backbone polymer is preferably added concurrently at the initial stage in view of reduction in reaction time and productivity, for example. The graft component is preferably added successively in terms of grafting efficiency and reaction control.

After the graft polymerization step, an aging step or a post-treatment step may optionally be performed, as needed.

The graft polymerization step is preferably performed in the presence of one or two or more polymerization initiators. The polymerization initiator is preferably a known radical polymerization initiator, and examples thereof include azo initiators and peroxide initiators. Preferred among these are peroxide initiators in terms of grafting efficiency. Specific examples thereof include persulfates such as ammonium persulfate, sodium persulfate, and potassium persulfate; hydrogen peroxide; and organic peroxides such as ketone peroxides, hydroperoxides, dialkyl peroxides, peroxyesters, peroxyketals, and diacyl peroxides. Specific examples thereof include the initiators disclosed in WO 2008/020556, JP 2007-254679 A, JP 2013-40279 A, JP 2009-256656 A, and JP 2001-278922 A.

The peroxide initiator is preferably appropriately selected depending on the factors such as the types of the backbone polymer and the graft component. For example, in order to obtain a grafted polymer having the structure (i), an organic peroxide is preferably used. In particular, a dialkyl peroxide is more preferred, and di-t-butyl peroxide is still more preferred. In order to obtain a grafted polymer having the structure (ii), a persulfate or hydrogen peroxide is preferably used, and more preferred is a persulfate.

The amount of the polymerization initiator used is preferably, but not limited to, 0.1 to 15 parts by weight, more preferably 0.5 to 10 parts by weight, still more preferably 1 to 8 parts by weight per total 100 parts by weight of the graft component constituting a branched chain in order to enhance the grafting efficiency, reduce an unreacted polymerization initiator, and reduce the production cost, for example.

In the graft polymerization step, a catalyst for decomposing a polymerization initiator, a reducing agent, or other agents may be used in addition to a polymerization initiator, as needed. Examples of the catalyst for decomposing a polymerization initiator and the reducing agent include, but are not limited to, the compounds disclosed in JP 2013-40279 A.

In order to obtain the grafted polymer having the structure (i), the polymerization is preferably performed in a non-aqueous system in terms of grafting efficiency, more preferably performed using as little solvent as possible. Specifically, the amount of the solvent used is preferably 10% by mass or less, more preferably 5% by mass or less, still more preferably 3% by mass or less, particularly preferably 1% by mass or less, most preferably substantially 0% by mass based on 100% by mass of the total amount in the reaction system. The phrase "substantially 0% by mass" means that a solvent is not added positively during polymerization and means that mixing of a solvent at an impurity level is acceptable. When a solvent is used, any solvent may be used. Preferred are a solvent having a small chain transfer constant of the monomer component to the solvent and a compound having a boiling point of 70°C or higher usable under atmospheric pressure, for example. Specific examples thereof include alcohols, diethers, and acetic acid-based compounds disclosed in JP 2013-40279 A, and one or two or more of these may be used.

In order to obtain the grafted polymer having the structure (ii), the graft polymerization is preferably performed by solution polymerization. That is, the graft polymerization step is preferably performed in the presence of a solvent. The solvent may be any one capable of dissolving the vinyl lactam unit-containing polymer. Examples thereof include water; organic solvents such as alcohols, ethers, ketones, esters, amides, sulfoxides, and hydrocarbons; and a solvent mixture of water and an organic solvent. Preferred among these is water. An organic amine or ammonia may be added to the solvent to neutralize an acid or control pH, for example. In the case of a water-containing solvent, an alkali metal hydroxide may be used.

In order to enhance the grafting efficiency, the amount of the solvent is preferably set such that the concentration of the vinyl lactam unit-containing polymer as the backbone polymer in the reaction system is 10% by mass or more. When the graft polymerization is performed by emulsion polymerization or suspension polymerization, the concentration of the polymer in a phase in which the vinyl lactam unit-containing polymer is dissolved is preferably controlled to 10% by mass or more. Specifically, the amount of the solvent is preferably 5 to 900 parts by weight, more preferably 25 to 400 parts by weight per 100 parts by weight of the vinyl lactam unit-containing polymer. The solvent may be added concurrently at the initial stage or may be added successively.

The polymerization temperature is preferably, but not limited to, 50°C or higher, more preferably 70°C or higher, still more preferably 80°C or higher in view of viscosity and reaction efficiency, for example. In order to more suppress thermal decomposition or volatilization of monomers, the polymerization temperature is preferably 200°C or lower, more preferably 160°C or lower, still more preferably 150°C or lower.

The polymerization time is preferably, but not limited to, 30 to 420 minutes, more preferably 45 to 390 minutes,

still more preferably 60 to 360 minutes, particularly preferably 90 to 300 minutes, for example. When the polymerization is carried out while the graft component is added, the polymerization time means the sum of the time of adding the graft component and an aging time. When the graft component is added concurrently, and then, the polymerization is carried out while the polymerization initiator is added, the polymerization time means the time of adding the polymerization initiator. When the graft component and the polymerization initiator are each added concurrently, and then, the polymerization is carried out, the polymerization time means the time of heating.

<Water-soluble resin>

The water-soluble resin used in the present invention is readily soluble or dispersible in water. Specifically, the water-soluble resin is preferably a resin having a solubility of 0.05 g or more, more preferably 0.1 g or more in 100 g of water having a temperature of 20°C. The resin may be made of any material as long as it has such properties. For example, cellulose derivatives such as cellulose, methyl cellulose, hydroxypropyl cellulose, carboxymethyl cellulose, and salts thereof; polyvinyl alcohol-based materials; pullulan; starch-based materials; and polyalkylene oxide-based materials may be used.

The water-soluble resin is available under the following trade names, for example: Pullulan Film (produced by Hayashibara Co., Ltd.) made of pullulan; Dissolvo (produced by Mishima Paper Co., Ltd.) made of cellulose and a sodium salt of carboxymethyl cellulose; SOLUBLON (produced by Aicello Corporation), Hi-Selon (produced by PVOH Film), Tosslon (produced by Tokyo Cellophane Co., Ltd.), and KURARAY VINYLON FILM (produced by Kuraray Co., Ltd.), which are made of a polyvinyl alcohol-based polymer; and ALKOX (polyethylene oxide resin) film (produced by Meisei Chemical Works, Ltd.) and Flexine (a film formed of a water-soluble resin Paogen including polyoxyalkylene glycol, polycarboxylic acid and a lower alkyl ester thereof, produced by Dai-Ichi Kogyo Seiyaku Co., Ltd.) as polyalkylene oxide-based products.

In particular, the water-soluble resin is particularly preferably a polyvinyl alcohol-based polymer in terms of film strength and water solubility, for example. That is, the water-soluble film of the present invention particularly preferably includes a polyvinyl alcohol-based polymer and a grafted polymer.

The following further describes the polyvinyl alcohol-based polymer.

The polyvinyl alcohol-based polymer is prepared by polymerizing a vinyl ester and optionally a monomer other than vinyl esters (also referred to as different monomer) as needed to prepare a polyvinyl ester (polyvinyl ester-based polymer) and saponifying the polyvinyl ester, and has a structural unit represented by the following formula (3). In the formula, n represents an average degree of polymerization and is 1 or greater.

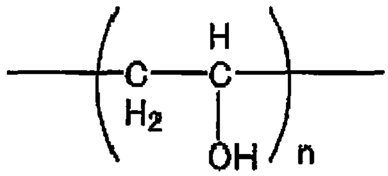

(3)

The vinyl ester (monomer) constituting the polyvinyl ester-based polymer may be one or two or more of vinyl acetate, vinyl formate, vinyl propionate, vinyl valerate, vinyl caprate, vinyl laurate, vinyl myristate, vinyl palmitate, vinyl benzoate, vinyl stearate, vinyl pivalate, and vinyl versatate. In particular, vinyl acetate is preferred in terms of productivity or availability.

The monomers constituting the polyvinyl ester-based polymer may include the above-described different monomer as needed. Examples of the different monomer include N-vinylformamide-based monomers such as N-vinylformamide and N-methyl-N-vinylformamide; N-vinylacetamide-based monomers such as N-vinylacetamide and N-methyl-N-vinylacetamide; N-vinylpyrrolidone-based monomers such as N-vinyl-2-pyrrolidone, N-vinyl-3-propyl-2-pyrrolidone, and N-vinyl-5,5-dimethyl-2-pyrrolidone; N-vinylcaprolactam-based monomers such as N-vinyl-2-caprolactam and N-vinyl-3-propyl-2-caprolactam; oxyalkylene group-containing unsaturated monomers such as polyoxyethylene (meth)allyl ether, polyoxypropylene (meth)allyl ether, polyoxyethylene (meth)acrylate, polyoxypropylene (meth)acrylate, polyoxyethylene (meth)acrylamide, polyoxypropylene (meth)acrylamide, polyoxyethylene (1-(meth)acrylamido-1,1-dimethylpropyl)ester, polyoxyethylene vinyl ether, and polyoxypropylene vinyl ether; vinyl ether-based monomers such as methyl vinyl ether, ethyl vinyl ether, propyl vinyl ether, butyl vinyl ether, ethylene glycol vinyl ether, 1,3-propanediol vinyl ether, and 1,4-butanediol vinyl ether; $\alpha$-olefins such as ethylene, propylene, and 1-hexene; acrylamide derivatives such as acrylamide and N-methylacrylamide; methacrylamide derivatives such as methacrylamide and N-methylmethacrylamide; allyl acetate; allyl ethers such as propyl allyl ether; vinylsilanes such as vinyltrimethoxysilane; isopropenyl acetate; hydroxy group-containing $\alpha$-olefins such as 3-buten-1-ol, 4-penten-1-ol, 5-hexen-1-ol, and 7-octen-1-ol; monomers containing a sulfonic acid group derived from ethylenesulfonic acid, allylsulfonic acid, methallylsulfonic acid, or 2-acrylamido-2-methylpropanesulfonic acid, for example; and monomers containing a cationic group derived from vinyloxyethyltrimethylammonium chloride, vinyloxybutyltrimethylammonium chloride, vinyloxyethyldimethylamine, vinyloxymethyldiethylamine, N-acrylamidomethyltrimethylammonium chloride, N-acrylamidoethyltrimethylammonium chloride, N-acrylamidodimethylamine, allyltrimethylammonium chloride, methallyltrimethylammonium chloride, dimethylallylamine, or allylethylamine, for example. One or two or more of these may be used.

The amount of the different monomer in 100 mol% of all the monomers constituting the polyvinyl ester-based polymer is preferably 50 mol% or less, more preferably 20 mol% or less, still more preferably 10 mol% or less, particularly preferably 1 mol% or less.

The polyvinyl alcohol-based polymer preferably has an average degree of saponification of 50 to 100 mol% in order to more enhance the film strength and the solubility in cold water, for example. The lower limit of the average degree of saponification is more preferably 60 mol% or more, still more preferably 70 mol% or more. The upper limit thereof is more preferably less than 100 mol%, still more preferably 99 mol% or less, particularly preferably 95 mol% or less. Saponification will be described in more detail below.

The average degree of polymerization (n in the formula (3)) of the polyvinyl alcohol-based polymer is preferably 200 to 10000 in order to more enhance the film strength and the solubility in cold water, for example. The average degree of polymerization is more preferably 500 or higher, still more preferably 1000 or higher. The average degree of polymerization is more preferably 6000 or lower, still more preferably 4000 or lower.

The polyvinyl alcohol-based polymer may be produced by a method that includes polymerizing a vinyl ester and optionally a different monomer to prepare a vinyl ester-based polymer and saponifying the vinyl ester-based polymer in a solvent, for example.

The polymerization of the vinyl ester and the different monomer constituting the vinyl ester-based polymer may be performed by solution polymerization, suspension polymerization, emulsion polymerization, bulk polymerization, or precipitation polymerization, for example. When a solvent is used, known solvents such as alcohols may be used as a solvent. Examples of an initiator used in the polymerization include azo polymerization initiators such as 2,2'-azobis (isobutyronitrile) and peroxides such as benzoyl peroxide. The polymerization temperature may be set within the range of 0°C to 150°C, for example.

The polyvinyl alcohol-based polymer can be obtained by saponifying the vinyl ester-based polymer. Examples of a saponification solvent include alcohols such as methanol and ethanol, esters such as methyl acetate and ethyl acetate, dimethyl sulfoxide, and solvent mixtures thereof. Examples of a saponification catalyst include sodium hydroxide, potassium hydroxide, sulfuric acid, hydrochloric acid, and hydrogen peroxide. Other conditions of the saponification reaction may be appropriately adjusted depending on the target degree of saponification, for example. For example, the reaction temperature and the reaction time may be set at 0°C to 200°C and 0.1 to 24 hours, respectively.

<Different component>

The water-soluble film of the present invention may optionally contain one or two or more components (also referred to as a different component) other than the grafted polymer and the water-soluble resin, as needed. Examples of the different component include, but are not limited to, various additives and various polymers.

The amount of the different component is preferably 0% to 20% by mass, more preferably 1% to 10% by mass of 100% by mass of the water-soluble film of the present invention.

[Method for producing water-soluble film]

The water-soluble film of the present invention preferably further contains a water-soluble resin in addition to the grafted polymer as described above. The water-soluble film is suitably produced by a production method that includes a step of mixing a grafted polymer and a water-soluble resin (also referred to as a mixing step), and such a production method is also one aspect of the present invention. The production method preferably further includes a film-forming step, and may include one or two or more other steps applicable to usual preparation of films.

The following further describes the respective steps.

<Mixing step>

The mixing step (also referred to as blending step) is a step of mixing the grafted polymer obtained in the above graft polymerization step and a water-soluble resin (preferably polyvinyl alcohol-based polymer). In the mixing step, a different component may be further mixed therewith. These components may be mixed all at once, or after part of components to be mixed is mixed, the remaining portion may be mixed therewith.

In the mixing step, the grafted polymer, the water-soluble resin, and optionally the different component may be mixed by any means. For example, they may be dissolved or dispersed in a solvent or may be melt-kneaded, for example.

When a solvent is used, the solvent may be, but not limited to, water, an organic solvent, or a solvent mixture of water and an organic solvent. Examples of the organic solvent include, but are not limited to, dimethyl sulfoxide, dimethylformamide, dimethylacetamide, methanol, ethanol, n-propanol, i-propanol, phenol, ethylene glycol, propylene glycol, n-butanol, toluene, xylene, ethyl acetate, n-propyl acetate, n-butyl acetate, isobutyl acetate, n-amyl acetate, tetrahydrofuran, dioxane, dimethyl acetamide, chloroform, acetone, methyl ethyl ketone, methyl isobutyl ketone, cyclohexanone, ethylene glycol monomethyl ether, propylene glycol monomethyl ether, propylene glycol monoethyl ether, propylene glycol tertially butyl ether, 3-methyl-3-methoxy butanol, dipropylene glycol monomethyl ether, ethylene glycol monomethyl ether, ethylene glycol monoethyl ether, ethylene glycol monobutyl ether, diethylene glycol monoethyl ether, and diethylene glycol monobutyl ether. Preferred among these is water.

The mixing step is preferably performed at a temperature of 20°C to 90°C. In such a mixing step, the grafted polymer and the water-soluble resin (preferably polyvinyl alcohol-based polymer) are more sufficiently mixed. Thus, a more highly uniform water-soluble film can be obtained. The temperature is more preferably 50°C to 90°C.

<Film-forming step>

The film-forming step is a step of forming a film using a mixture obtained in the mixing step. The film may be formed by any means, for example, by a method in which the mixture is applied to a base material, dried or hardened, and as needed, peeled from the base material (referred to as an application method or a coating method), a method in which a film formed from the mixture is thermocompression-bonded to a support, or a kneading method. Among these, the application method is preferably used.

[Uses]

The water-soluble film of the present invention has an excellent solubility in cold water, extensibility, and chemical resistance. Therefore, the water-soluble film is particularly useful as packaging materials for chemicals such as agrochemicals or detergents. That is, the water-soluble film of the present invention is preferably used to package a chemical and/or a detergent. Further, the water-soluble film of the present invention is preferably one suitable for packaging a chemical and/or a detergent. An object to be packaged (e.g. chemicals) may be in any form (e.g. powder, granules, liquid) and may have any size or any particle size distribution. For example, the detergent may suitably be any of powder detergents, liquid detergents, and gel detergents. Further, an object to be packaged may optionally contain any additive such as a dispersant, a bonding agent, or a surfactant, as needed. The water-soluble film of the present invention further functions as a builder that has excellent anti-soil redeposition properties and excellent detergency, and is therefore particularly useful as packaging materials for detergents.

<Composition>

Another aspect of the present invention relates to a composition (mixture) containing a grafted polymer and a water-soluble resin. The water-soluble film of the present invention can be suitably obtained by forming the composition into a film. The composition can be obtained by mixing a grafted polymer and a water-soluble resin (preferably polyvinyl alcohol-based polymer).

<Packaged product>

Another aspect of the present invention relates to a packaged product including the water-soluble film of the present invention and a chemical and/or a detergent packaged with the water-soluble film. The packaged product of the present invention is, for example, a packaged product that includes a water-soluble film containing a grafted polymer and a water-soluble resin (preferably polyvinyl alcohol-based polymer) and a chemical and/or a detergent packaged with the water-soluble film. The forms and sizes of the packaged product and the chemical and/or the detergent in the packaged product are not limited, and may be appropriately designed. The form of the package may be a hermetically sealed package or a non-hermetically sealed package. In order to more readily and safely use a packaged product, a hermetically sealed package is preferred, for example.

<Method for producing packaged product>

Another aspect of the present invention relates to a method for producing a packaged product including packaging a chemical and/or a detergent with the water-soluble film of the present invention. The method for producing a packaged product of the present invention is, for example, a water-soluble film production method that includes a step of mixing a grafted polymer and a water-soluble resin (preferably polyvinyl alcohol-based polymer), a step of forming a

film using a mixture obtained in the mixing step, and a step of packaging a chemical and/or a detergent with the water-soluble film obtained in the film-forming step.

<Packaging method, etc.>

Another aspect of the present invention relates to a packaging method including packaging a chemical and/or a detergent with the water-soluble film of the present invention. The packaging method of the present invention is, for example, a packaging method that includes a step of mixing a polyamine backbone-containing compound and a water-soluble resin (preferably polyvinyl alcohol-based polymer), a step of forming a film using a mixture obtained in the mixing step, and a step of packaging a chemical and/or a detergent with the water-soluble film obtained in the film-forming step. The present invention also relates to a method for using a water-soluble film of the present invention, including a step of packaging a chemical and/or a detergent with the water-soluble film of the present invention. The using method of the present invention is, for example, a method for using a water-soluble film, including a step of mixing a polyamine backbone-containing compound and a water-soluble resin (preferably polyvinyl alcohol-based polymer), a step of forming a film using a mixture obtained in the mixing step, and packaging a chemical and/or a detergent with the water-soluble film obtained in the film-forming step.

EXAMPLES

The present invention is described in more detail below with reference to the examples, but the present invention is not limited to only these examples. Unless otherwise stated, "%" means "% by mass".

In the following examples and comparative examples, a polyvinyl alcohol-based polymer (weight average molecular weight: 85000 to 124000, degree of saponification: 87% to 89%), which is a reagent produced by ALDRICH, was used as a polyvinyl alcohol-based polymer (PVA). Hereinafter, the polyvinyl alcohol-based polymer is also simply referred to as a polyvinyl alcohol.

<Method for measuring weight average molecular weight (Mw)>

(1) Conditions 1 for GPC measurement

The weight average molecular weights (Mw) of the grafted polymers used in the following examples and the like were measured under the following conditions.

Apparatus: High-performance GPC apparatus (HLC-8320GPC) produced by Tosoh Corporation
Detector: RI detector
Columns: SHODEX Asahipak GF-310-HQ, GF-710-HQ, and GF-1G 7B produced by Showa Denko K.K.
Column temperature: 40°C
Flow rate: 0.5 ml/min
Calibration curve: POLYETHYLENE GLYCOL STANDARD produced by GL Sciences Inc.
Eluent: 0.1 N sodium acetate/ acetonitrile = 3/1 (mass ratio)

(2) Conditions 2 for GPC measurement

The weight average molecular weight (Mw) of the polyacrylic acid (HL-415) used in Comparative Example 2 was measured under the following conditions.

Apparatus: HLC-8320GPC produced by Tosoh Corporation Detector: RI
Column: One TSK-guard column and two TSK-GEL G3000PWXL columns (three columns in total) produced by Tosoh Corporation connected in series
Column temperature: 35°C
Flow rate: 0.5 ml/min
Calibration curve: POLY SODIUM ACRYLATE STANDARD produced by Sowa Kagaku Co., Ltd.
Eluent: A dilution prepared by diluting a mixture of sodium dihydrogenphosphate dodecahydrate/disodium hydrogenphosphate dihydrate (34.5 g/46.2 g) with 5000 g of pure water
Calibration curve: POLYACRYLIC ACID STANDARD produced by American Polymer Standard Corp.

<Synthesis of grafted polymer>

Synthesis Example 1 (Polymer 1)

A 500-mL glass separable flask equipped with a thermometer, a reflux condenser, and a stirrer was charged with 185.6 g of an ethylene oxide (20 mol in average) adduct of phenol, and the substance was heated to 128°C under stirring. Subsequently, 3900 μL of di-t-butyl peroxide (hereinafter, also referred to as "DTBP") and 72.2 g of 100% acrylic acid (hereinafter, also referred to as "AA") were added dropwise through different dropping nozzles to the polymerization reaction system having a constant temperature of 128°C under stirring. The timing of the start of the dropwise addition of DTBP was defined as the start of the reaction. As for the dropwise addition times and the dropwise addition sequences, DTBP was added dropwise over 195 minutes after the start of the reaction at a constant rate, and AA was added dropwise over 225 minutes after the lapse of 20 minutes from the start of the reaction at a constant rate. After completion of all the dropwise additions, the reaction solution was further maintained at 128°C for 70 minutes to be aged to complete the polymerization. Thereafter, 135.7 g of pure water was added thereto. Thus, Polymer 1 having a weight average molecular weight of 12000 and a solid content of 65% was obtained.

Synthesis Example 2 (Polymer 2)

A 500-mL glass separable flask equipped with a thermometer, a reflux condenser, and a stirrer was charged with 150.9 g of SOFTANOL (registered trademark) 120 produced by Nippon Shokubai Co., Ltd., and the substance was heated to 128°C under stirring. Subsequently, 8800 μL of DTBP and 100.6 g of AA were added dropwise through different dropping nozzles to the polymerization reaction system having a constant temperature of 128°C under stirring. The timing of the start of the dropwise addition of DTBP was defined as the start of the reaction. As for the dropwise addition times and the dropwise addition sequences, DTBP was added dropwise over 220 minutes after the start of the reaction at a constant rate, and AA was added dropwise over 210 minutes after the lapse of 20 minutes from the start of the reaction at a constant rate. After completion of all the dropwise additions, the reaction solution was further maintained at 128°C for 60 minutes to be aged to complete the polymerization. Thereafter, 86.2 g of pure water was added thereto. Thus, Polymer 2 having a weight average molecular weight of 7100 and a solid content of 71% was obtained.

Synthesis Example 3 (Polymer 3)

A 500-mL glass separable flask equipped with a thermometer, a reflux condenser, and a stirrer was charged with 145.7 g of SOFTANOL (registered trademark) 300 produced by Nippon Shokubai Co., Ltd. and 48.6 g of maleic acid (hereinafter, also referred to as "MA"), and the contents were heated to 128°C under stirring. Subsequently, 8500 μL of DTBP and 48.6 g of MA were added dropwise through different dropping nozzles to the polymerization reaction system having a constant temperature of 128°C under stirring. The timing of the start of the dropwise addition of DTBP was defined as the start of the reaction. As for the dropwise addition times and the dropwise addition sequences, DTBP was added dropwise over 170 minutes after the start of the reaction at a constant rate, and MA was added dropwise over 210 minutes after the lapse of 20 minutes from the start of the reaction at a constant rate. After completion of all the dropwise additions, the reaction solution was further maintained at 128°C for 60 minutes to be aged to complete the polymerization. Thereafter, 70.4 g of pure water was added thereto. Thus, Polymer 3 having a weight average molecular weight of 6500 and a solid content of 50% was obtained.

Synthesis Example 4 (Polymer 4)

A 500-mL glass separable flask equipped with a thermometer, a reflux condenser, and a stirrer was charged with 132.0 g of NEWCOL 2310 produced by Nippon Nyukazai Co., Ltd., and the substance was heated to 128°C under stirring. Subsequently, 6600 μL of DTBP and 88.0 g of AA were added dropwise through different dropping nozzles to the polymerization reaction system having a constant temperature of 128°C under stirring. The timing of the start of the dropwise addition of DTBP was defined as the start of the reaction. As for the dropwise addition times and the dropwise addition sequences, DTBP was added dropwise over 220 minutes after the start of the reaction at a constant rate, and AA was added dropwise over 210 minutes after the lapse of 20 minutes from the start of the reaction at a constant rate. After completion of all the dropwise additions, the reaction solution was further maintained at 128°C for 60 minutes to be aged to complete the polymerization. Thereafter, 75.1 g of pure water was added thereto. Thus, Polymer 4 having a weight average molecular weight of 23000 and a solid content of 62% was obtained.

Synthesis Example 5 (Polymer 5)

A 500-mL glass separable flask equipped with a thermometer, a reflux condenser, and a stirrer was charged with 76.3 g of pure water and 99.0 g of polyvinyl pyrrolidone (PVP) K-30 produced by Nippon Shokubai Co., Ltd. to prepare a polymerization reaction system. The polymerization reaction system was heated to 85°C under stirring.

Separately, an aqueous monomer solution was prepared by mixing 5.5 g of a 100% by mass aqueous solution of acrylic acid (hereinafter, also referred to as "100% AA"), 28.6 g of pure water, and 2.6 g of a 25% aqueous ammonia solution. Then, 36.7 g of the aqueous monomer solution and 7.3 g of a 3% by mass aqueous solution of ammonium persulfate (hereinafter, also referred to as "3% APS") were added dropwise through different dropping nozzles to the polymerization reaction system having a constant temperature of 85°C under stirring. The timings of the start of the dropwise addition of 100% AA and 3% APS were defined as the start of the reaction. As for the dropwise addition times and the dropwise addition sequences, 100% AA was added dropwise over 90 minutes after the start of the reaction at a constant rate, and 3% APS was added dropwise over 90 minutes after the start of the reaction at a constant rate. The dropwise additions of 100% AA and 3% APS were started at the same time. After completion of all the dropwise additions, the contents were cooled to 77°C over 30 minutes. Then, 0.66 g of a 10% aqueous solution of V-50 produced by Wako Pure Chemical Industries, Ltd. was added in three portions to the reaction solution having a constant temperature of 77°C under stirring. As for the addition sequences, 0.22-g, 0.22-g, and 0.22-g portions of the aqueous solution were added respectively 0 minutes, 30 minutes, and 60 minutes after the aqueous solution was cooled to 77°C. Thus, Polymer 5 having a weight average molecular weight of 35000 and a solid content of 26.0% was obtained.

Synthesis Example 6 (Polymer 6)

A 500-mL glass separable flask equipped with a thermometer, a reflux condenser, and a stirrer was charged with 82.1 g of NEWCOL 740 produced by Nippon Nyukazai Co., Ltd., and the substance was heated to 135°C under stirring. Subsequently, 4400 μL of DTBP and 35.2 g of N-vinyl pyrrolidone (hereinafter, also referred to as "NVP") were added dropwise through different dropping nozzles to the polymerization reaction system having a constant temperature of 135°C under stirring. The timing of the start of the dropwise addition of DTBP was defined as the start of the reaction. As for the dropwise addition times and the dropwise addition sequences, DTBP was added dropwise over 225 minutes after the start of the reaction at a constant rate, and NVP was added dropwise over 205 minutes after the lapse of 20 minutes from the start of the reaction at a constant rate. After completion of the dropwise addition, the reaction solution was further maintained at 135°C for 60 minutes to be aged to complete the polymerization. Thereafter, 120.9 g of pure water was added thereto. Thus, Polymer 6 having a weight average molecular weight of 7600 and a solid content of 49% was obtained.

<Preparation of film>

Example 1

To a 50-mL screw tube were added 3.7 g of Polymer 1, 3.6 g of polyvinyl alcohol, and 32.7 g of water in the stated order. The solids were dissolved while the contents were repeatedly heated and stirred in a water bath having a temperature of 70°C to prepare an aqueous solution with a solid content of 15%. The resulting aqueous solution was applied to a release film (a PET film treated with silicon) using an applicator. The aqueous solution was applied to a thickness such that the dried matter of the aqueous solution had a thickness shown in Table 2. The release film after the application treatment was dried in a hot air circulating oven at 100°C for 10 minutes. Then, the release film was taken out from the oven and cooled to room temperature, and was then removed to obtain a water-soluble film 1.

Example 2

To a 50-mL screw tube were added 1.8 g of Polymer 1, 4.8 g of polyvinyl alcohol, and 34.0 g of water in the stated order. The solids were dissolved while the contents were repeatedly heated and stirred in a water bath having a temperature of 70°C to prepare an aqueous solution having a solid content of 15%. The resulting aqueous solution was subjected to the same steps as in Example 1 to obtain a water-soluble film 2.

Example 3

To a 50-mL screw tube were added 0.46 g of Polymer 1, 5.7 g of polyvinyl alcohol, and 33.8 g of water in the stated order. The solids were dissolved while the contents were repeatedly heated and stirred in a water bath having a temperature of 70°C to prepare an aqueous solution having a solid content of 15%. The resulting aqueous solution was

subjected to the same steps as in Example 1 to obtain a water-soluble film 3.

Example 4

To a 50-mL screw tube were added 3.3 g of Polymer 2, 3.6 g of polyvinyl alcohol, and 33.1 g of water in the stated order. The solids were dissolved while the contents were repeatedly heated and stirred in a water bath having a temperature of 70°C to prepare an aqueous solution having a solid content of 15%. The resulting aqueous solution was subjected to the same steps as in Example 1 to obtain a water-soluble film 4.

Example 5

To a 50-mL screw tube were added 4.8 g of Polymer 3, 3.6 g of polyvinyl alcohol, and 31.6 g of water in the stated order. The solids were dissolved while the contents were repeatedly heated and stirred in a water bath having a temperature of 70°C to prepare an aqueous solution having a solid content of 15%. The resulting aqueous solution was subjected to the same steps as in Example 1 to obtain a water-soluble film 5.

Example 6

To a 50-mL screw tube were added 3.9 g of Polymer 4, 3.6 g of polyvinyl alcohol, and 32.5 g of water in the stated order. The solids were dissolved while the contents were repeatedly heated and stirred in a water bath having a temperature of 70°C to prepare an aqueous solution having a solid content of 15%. The resulting aqueous solution was subjected to the same steps as in Example 1 to obtain a water-soluble film 6.

Example 7

To a 50-mL screw tube were added 4.6 g of Polymer 5, 4.8 g of polyvinyl alcohol, and 30.6 g of water in the stated order. The solids were dissolved while the contents were repeatedly heated and stirred in a water bath having a temperature of 70°C to prepare an aqueous solution having a solid content of 15%. The resulting aqueous solution was subjected to the same steps as in Example 1 to obtain a water-soluble film 7.

Example 8

To a 50-mL screw tube were added 4.9 g of Polymer 6, 3.6 g of polyvinyl alcohol, and 31.5 g of water in the stated order. The solids were dissolved while the contents were repeatedly heated and stirred in a water bath having a temperature of 70°C to prepare an aqueous solution having a solid content of 15%. The resulting aqueous solution was subjected to the same steps as in Example 1 to obtain a water-soluble film 8.

Comparative Example 1

To a 50-mL screw tube were added 44.0 g of water and 6.0 g of polyvinyl alcohol in the stated order. The solids were dissolved while the contents were repeatedly heated and stirred in a water bath having a temperature of 70°C to prepare an aqueous solution having a solid content of 15%. The resulting aqueous solution was subjected to the same steps as in Example 1 to obtain a comparative water-soluble film 1.

Comparative Example 2

To a 50-mL screw tube were added 5.2 g of AQUALIC HL-415 (polyacrylic acid, Mw: 12000, solid content: 46%, hereinafter, also referred to as "HL-415") produced by Nippon Shokubai Co., Ltd., 3.6 g of polyvinyl alcohol, and 31.2 g of water in the stated order. The solids were dissolved while the contents were repeatedly heated and stirred in a water bath having a temperature of 70°C to prepare an aqueous solution having a solid content of 15%. The resulting aqueous solution was subjected to the same steps as in Example 1 to obtain a comparative water-soluble film 2.

Comparative Example 3

To a 50-mL screw tube were added 2.4 g of polyvinyl pyrrolidone (PVP K30, solid content: 49%, hereinafter, also referred to as "PVP K30") produced by Nippon Shokubai Co., Ltd., 4.8 g of polyvinyl alcohol, and 32.8 g of water in the stated order. The solids were dissolved while the contents were repeatedly heated and stirred in a water bath having a temperature of 70°C to prepare an aqueous solution having a solid content of 15%. The resulting aqueous

solution was subjected to the same steps as in Example 1 to obtain a comparative water-soluble film 3.

The polymers blended in the examples and the comparative examples were specifically shown in Table 1. Further, the films obtained in the examples and the comparative examples were subjected to the following evaluation tests. The results are shown in Table 2.

<Evaluation tests of films>

1. Solubility

A 100-mL beaker was charged with 100 g of pure water having a temperature of 5°C, and the water was stirred using a magnetic stirrer and a stirring bar. A 4 x 4 cm film specimen cut from each film was placed in water under stirring, and the time required for completely dissolving the film specimen (time from when the film specimen was placed in water until when the film specimen disappeared from view) was measured. The resulting time (dissolution time) is shown in Table 2. Further, these dissolution times were converted to the dissolution times of a 40-μm-thick film using the following formula. A shorter dissolution time means better solubility.

$$\text{Dissolution time (in the case of 40 μm) (second)} = (40/\text{thickness of film (μm)})^2 \times \text{dissolution time (second)}$$

The thickness of the film was measured using Coolant Proof Micrometer IP65. The thicknesses of six random points of the film were measured and averaged to determine the average thickness of the film.

2. Hard water resistance

To a 1-L beaker containing 67.6 g of glycine and 52.6 g of sodium chloride were added pure water and 48% sodium hydroxide to prepare 600 g of a glycine buffer stock solution with a pH of 10. A 54.0-g portion of the glycine buffer stock solution was placed in a 1-L beaker and diluted with pure water to prepare 1000 g of a glycine buffer dilution. Separately, a film was dissolved in water to prepare a 2.5% aqueous solution of the film. To 2.5 g of the aqueous solution of the film was added a 80-g portion of the glycine buffer dilution. Thus, a test solution was prepared. Separately, a 1 mol/L aqueous solution of calcium chloride was prepared as hard water. A 0.1-mL portion of the hard water was dropwise added to the test solution every three seconds using an automatic titrator COM-1700 produced by Hiranuma Sangyo Corporation. At the time when 6 mL of the hard water was dropwise added in total, the transmittance (%) of 650-nm light was measured. A value closer to 100 means better hard water resistance.

3. Strength

A 11.84-g metal ball was dropped freely onto a 3 × 3 cm film specimen cut from each film. The position from which the ball is dropped was adjusted, and the potential energy of the metal ball at the height of the drop-start position that leads to film breakage was determined as strength using the following formula:

$$\text{Strength (J)} = 0.01184\ \text{(kg)} \times 9.8\ (\text{m/s}^2) \times \text{height from which metal ball was dropped (m)}.$$

Further, the thus-determined value was converted to the strength of a 40-μm-thick film using the following formula:

$$\text{Strength (in the case of 40 μm) (J)} = (40/\text{thickness of film (μm)})^2 \times \text{strength (J)}.$$

A larger value means higher strength.

The thickness of the film was measured using Coolant Proof Micrometer IP65. The thicknesses of six random points of the film were measured and averaged to determine the average thickness of the film.

4. Extensibility

A 1.5 × 9.0 cm film specimen cut from each film was stretched using a tensile testing machine (produced by Shimadzu Corporation, Autograph AGS-100D) under the conditions of room temperature, initial distance between marked lines of 60 mm, and tensile speed of 5 mm/min, and the strain when the film broke (maximum strain) (%) was evaluated as extensibility. A larger maximum strain means higher extensibility.

5. Deodorant properties

A glass petri dish was prepared, and 2.5 g of a film was placed therein. Separately, an empty petri dish was prepared as a blank. These petri dishes were each completely sealed in a sampling bag with a sleeve (produced by GL Sciences Inc., Smart Bag PA, volume: 3 L) by heat sealing. A vacuum was created in each sampling bag, and then 2 L of nitrogen gas was introduced thereinto. Each petri dish was opened in the bag, and then 5 mL of acetic acid-saturated nitrogen gas was introduced thereinto using a syringe. After 2-hour standing, 100 mL of the air was suctioned from the bag and the reduction rate (%) was determined by comparison of the acetic acid concentrations using an acetic acid detector tube (produced by Gastec Corporation, No. 81 or 81L). The measured value was converted to the acetic acid concentration using the conversion scale described in the manual of the detector tube.

The reduction rate of the acetic acid was determined using the following equation.

Reduction rate (%) = {(Gas concentration for blank) - (Gas concentration for sample)} ÷ (Gas concentration for blank) × 100

6. Anti-soil redeposition properties

A polyester textile obtained from Test fabric Inc. was cut into 5 cm × 5 cm pieces of white cloth. The brightness of each of white cloth pieces was previously measured with a color difference meter SE6000 produced by Nippon Denshoku Industries Co., Ltd. based on the reflectance. Pure water was added to 4.41 g of calcium chloride dihydrate to prepare 15 kg of hard water. Separately, pure water was added to 4.0 g of sodium dodecylbenzenesulfonate, 6.0 g of sodium carbonate, and 2.0 g of sodium sulfate to prepare 100.0 g of an aqueous surfactant solution. The temperature of a Terg-O-tometer was set at 25°C. A pot was charged with 1 L of the hard water, 5 g of the aqueous surfactant solution, 1 g of a 10% (in terms of solid content) aqueous solution of the film obtained in the corresponding example or comparative example, 0.15 g of zeolite, and 0.25 g of carbon black. The contents were stirred at 100 rpm for one minute. Thereafter, five white cloth pieces were placed in the pot and stirred at 100 rpm for 10 minutes. Water was removed from the white cloth pieces by hand, and the white cloth pieces were placed in a pot containing 1 L of tap water at 25°C. They were stirred at 100 rpm for 2 minutes. Water was again removed from the white cloth pieces by hand, and the white cloth pieces were placed in a pot containing 1 L of tap water at 25°C. They were stirred at 100 rpm for 2 minutes. Water was removed from the white cloth pieces by hand, and the white cloth pieces were covered with an ironing cloth and smoothed with an iron to dry. Thereafter, the brightness of each of the white cloth pieces was again measured with the color difference meter based on the reflectance. The anti-soil redeposition rate (%) was determined from the above measurement results using the following equation. A higher anti-soil redeposition rate means better anti-soil redeposition properties.

Anti-soil redeposition rate (%) = (Brightness after washing)/(Brightness of original white cloth) × 100

7. Carbon black dispersibility

Pure water was added to 67.56 g of glycine, 52.60 g of sodium chloride, and 5.00 g of 48% sodium hydroxide to prepare 600.0 g of a mixture, and the mixture was adjusted to a pH of 10 with 48% sodium hydroxide to prepare a glycine buffer. Next, pure water was added to 6.00 g of the glycine buffer and 11.10 g of ethanol to prepare 1000.0 g of a dispersion. Separately, about 10 g of a 5.0% aqueous solution of the film (in terms of solid content) obtained in the corresponding example or comparative example was prepared. To a 100-ml screw-cap bottle containing 0.03 g of carbon black were added 9.0 g of the 5.0% aqueous solution of the film and 81.0 g of the dispersion to prepare a test solution. The screw-cap bottle containing the test solution was treated in an ultrasonic bath for 5 minutes. Then, a 10-mm stirrer bar was placed therein and the test solution was further stirred at 500 rpm for 5 minutes. After the stirring was stopped

and the test solution was allowed to stand for 3 hours, the appearance of the test solution was observed. Evaluation was performed based on the following criteria.

(1) Hydration of carbon black

Good: Carbon black was hardly visually observed at the liquid surface.
Fair: A small amount of carbon black floating on the liquid surface was visually observed.
Bad: A large amount of carbon black floating on the liquid surface was visually observed.

(2) Dispersion of carbon black

Good: Rich dispersion of carbon black in the liquid was visually observed.
Fair: Uniform dispersion of carbon black in the liquid was visually observed.
Bad: No dispersion of carbon black in the liquid was visually observed.

8. Detergency

Artificially contaminated wet cloth was obtained as artificially contaminated cloth from Laundry Science Association (Sentaku Kagaku Kyokai). The brightness of the artificially contaminated cloth was previously measured with a color difference meter SE6000 (produced by Nippon Denshoku Industries Co., Ltd.) based on the reflectance. Pure water was added to 1.47 g of calcium chloride dihydrate to prepare 10 kg of hard water. Separately, pure water was added to 4.8 g of polyoxyethylene lauryl ether sodium sulfate (AES), 0.6 g of polyoxyethylene lauryl ether (AE), 0.6 g of sodium borate, 0.9 g of citric acid, and 2.4 g of propylene glycol to prepare 80 g of a mixture. The mixture was adjusted to a pH of 8.2 with an aqueous sodium hydroxide solution, and pure water was added to the solution to prepare 100 g of an aqueous surfactant solution. The temperature of a Terg-o-Tometer was set at 27°C. A pot was charged with 1000 mL of the hard water, 5 mL of a 2.75% solution of the film (in terms of solid content) obtained in the corresponding example or comparative example, 4.8 mL of the aqueous surfactant solution, five pieces of artificially contaminated cloth, and five pieces of cotton white cloth prepared in conformity with JIS L 0803. The contents were stirred at 100 rpm for 10 minutes. The artificially contaminated cloth pieces were taken out from the pot, and water was removed therefrom by hand. Next, 1000 mL of the hard water was placed in a pot and then the artificially contaminated cloth pieces from which water was removed were placed therein, and they were stirred at 100 rpm for 2 minutes. The artificially contaminated cloth pieces were taken out from the pot, and water was removed therefrom by hand. The artificially contaminated cloth pieces were covered with an ironing cloth and smoothed with an iron to dry. The brightness of each of the dried artificially contaminated cloth pieces was measured with a color difference meter based on the reflectance. The washing rate (%) was determined based on the values determined by this method using the following equation.

Washing rate (%) = {(Brightness of artificially contaminated cloth pieces after washing) - (brightness of artificially contaminated cloth before washing)} ÷ {(brightness of original white cloth (EMPA221) before artificially contaminated) - (brightness of artificially contaminated cloth before washing)} × 100

[Table 1]

| | Structure of backbone polymer | Compositional ratio<br>Backbone polymer/AA/MA/NVP (mass%) | Mw | Solid content (mass%) |
|---|---|---|---|---|
| Polymer 1 | 20 EO adduct of phenol | 72/28/0/0 | 12000 | 65 |

(continued)

| | Structure of backbone polymer | Compositional ratio<br>Backbone polymer/AA/MA/NVP (mass%) | Mw | Solid content (mass%) |
|---|---|---|---|---|
| Polymer 2 | SOFTANOL 120 | 60/40/0/0 | 7100 | 71 |
| Polymer 3 | SOFTANOL 300 | 60/20/20/0 | 6500 | 50 |
| Polymer 4 | NEWCOL 2310 | 60/40/0/0 | 23000 | 62 |
| Polymer 5 | Polyvinylpyrrolidone | 95/5/0/0 | 35000 | 26 |
| Polymer 6 | NEWCOL 740 | 70/0/0/30 | 7600 | 49 |
| HL-415 | Polyacrylic acid | (No branched chain) AA: 100% | 12000 | 46 |
| PVP K30 | Polyvinylpyrrolidone | (No branched chain) NVP: 100% | 30000 | 49 |

[Table 2]

| | Polymer blended | | Thickness | Dissolution time | Dissolution time (in the case of 40 μm) | Hard water resistance | Extensibility |
|---|---|---|---|---|---|---|---|
| | Type | Blend proportion (mass%) | μm | second | second | % | % |
| Example 1 | Polymer 1 | 40 | 60 | 96 | 43 | 98.6 | - |
| Example 2 | Polymer 1 | 20 | 38 | - | - | 99.2 | - |
| Example 3 | Polymer 1 | 5 | 44 | 114 | 95 | - | 32 |
| Example 4 | Polymer 2 | 39 | 66 | 132 | 48 | 98.2 | - |
| Example 5 | Polymer 3 | 40 | 55 | 90 | 48 | - | 30 |
| Example 6 | Polymer 4 | 40 | 53 | 90 | 52 | 98.5 | - |
| Example 7 | Polymer 5 | 20 | 43 | 162 | 140 | 99.5 | - |
| Example 8 | Polymer 6 | 40 | 58 | 61 | 29 | 99.7 | - |
| Comparative Example 1 | | 0 | 28 | 120 | 245 | - | 21 |
| Comparative Example 2 | HL-415 | 40 | 13 | 5 | 47 | 93.4 | 3 |
| Comparative Example 3 | PVP K30 | 20 | 41 | 148 | 141 | - | 12 |

Table 2 demonstrates the followings.

Comparison between Examples 1 to 8 and Comparative Example 1, which differ mainly in whether a grafted polymer is used or not, shows remarkable differences in solubility and extensibility. Comparison between Example 1, 4

to 6, and 8 and Comparative Example 2, which differ mainly in whether a grafted polymer is used or polyacrylic acid is used, shows remarkable differences in solubility and hard water resistance. Thus, the water-soluble films including a grafted polymer are found to have all of high solubility in cold water, high hard water resistance, and extensibility. Further, comparison between Examples 2 and 7 and Comparative Example 3, which differ mainly in whether a grafted polymer is used or polyvinyl pyrrolidone is used, shows substantially the same solubility. This demonstrates that a water-soluble film including a grafted polymer, even when is does not contain expensive polyvinyl pyrrolidone as an essential component, can have a high solubility that is substantially equal to the solubility of one containing polyvinyl pyrrolidone as an essential component.

Although not shown in the table, the films obtained in Examples 1 to 8 were also found to have high strength. The films obtained in Examples 1 to 8 were also found to be more excellent in anti-soil redeposition properties or detergency than the film obtained in Comparative Example 3 (polyvinyl pyrrolidone was used). The films obtained in Examples 1 to 8 were also found to have excellent deodorant properties or excellent dispersibility of inorganic fine particles (carbon black).

## Claims

**1.** A water-soluble film comprising:

a grafted polymer; and
a water-soluble resin.

**2.** The water-soluble film according to claim 1,
wherein the grafted polymer has a polyalkylene glycol chain and/or a vinyl lactam unit in a backbone.

**3.** The water-soluble film according to claim 1 or 2,
wherein the grafted polymer has an anionic group and/or a lactam group in a branched chain.

**4.** The water-soluble film according to claim 3,
wherein the anionic group is a carboxyl group and/or a salt thereof.

**5.** The water-soluble film according to any one of claims 1 to 4,
wherein the water-soluble resin is a polyvinyl alcohol-based polymer.

**6.** The water-soluble film according to any one of claims 1 to 5,
wherein the proportion of the grafted polymer is 1% by mass or more of 100% by mass of the total amount of the water-soluble resin and the grafted polymer.

**7.** The water-soluble film according to any one of claims 1 to 6,
wherein the proportion of the grafted polymer is 90% by mass or less of 100% by mass of the total amount of the water-soluble resin and the grafted polymer.

**8.** The water-soluble film according to any one of claims 1 to 7,
wherein the water-soluble film has a thickness of 5 to 300 μm.

**9.** The water-soluble film according to any one of claims 1 to 8,
wherein the water-soluble film is used to package a chemical and/or a detergent.

**10.** A composition comprising:

a grafted polymer; and
a water-soluble resin.

**11.** A method for producing a water-soluble film containing a grafted polymer and a water-soluble resin, the method comprising mixing the grafted polymer and the water-soluble resin.

**12.** A packaged product comprising:

the water-soluble film according to any one of claims 1 to 9; and
a chemical and/or a detergent packaged with the water-soluble film.

**13.** A method for producing a packaged product, comprising packaging a chemical and/or a detergent with the water-soluble film according to any one of claims 1 to 9.

**14.** A packaging method comprising packaging a chemical and/or a detergent with the water-soluble film according to any one of claims 1 to 9.

**15.** A water-soluble film comprising a grafted polymer.

## INTERNATIONAL SEARCH REPORT

International application No.
PCT/JP2016/085785

A. CLASSIFICATION OF SUBJECT MATTER
*C08J5/18*(2006.01)i, *B65D65/46*(2006.01)i, *C08L29/04*(2006.01)i, *C08L51/00*(2006.01)i, *C08L51/08*(2006.01)i, *C08L101/14*(2006.01)i, *C08F271/00*(2006.01)n, *C08F283/06*(2006.01)n

According to International Patent Classification (IPC) or to both national classification and IPC

B. FIELDS SEARCHED

Minimum documentation searched (classification system followed by classification symbols)
C08J5/18, C08L, C08K

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 9-324096 A (Dai-Ichi Kogyo Seiyaku Co., Ltd.), 16 December 1997 (16.12.1997), claims; paragraphs [0014] to [0016], [0022], [0027]; examples (Family: none) | 1,3-15<br>2 |
| X<br>A | JP 2007-70493 A (Dai-Ichi Kogyo Seiyaku Co., Ltd.), 22 March 2007 (22.03.2007), claims; paragraphs [0001], [0007], [0026] to [0028], [0032], [0035]; examples (Family: none) | 1,3,5-15<br>2,4 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 February 2017 (22.02.17) | 07 March 2017 (07.03.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/085785

C (Continuation). DOCUMENTS CONSIDERED TO BE RELEVANT

| Category* | Citation of document, with indication, where appropriate, of the relevant passages | Relevant to claim No. |
|---|---|---|
| X<br><br>A | JP 6-73259 A (Kuraray Co., Ltd.),<br>15 March 1994 (15.03.1994),<br>claims; paragraphs [0009], [0025]; examples<br>(Family: none) | 1,3-8,10,11,<br>15<br>2,9,12-14 |
| X<br><br>A | JP 2011-511816 A (Bayer Schering Pharma AG.),<br>14 April 2011 (14.04.2011),<br>claims; paragraphs [0056] to [0062]; examples<br>& US 2011/0052699 A1<br>claims; paragraphs [0079] to [0088]; examples<br>& WO 2009/100871 A2 & EP 2249803 A1<br>& CA 2714340 A & KR 10-2010-0117603 A<br>& CN 101945646 A | 1,6-8,10,11,<br>15<br>2-5,9,12-14 |
| X<br>A | JP 6-184251 A (Showa Denko Kabushiki Kaisha),<br>05 July 1994 (05.07.1994),<br>claims; paragraph [0025]; examples<br>(Family: none) | 15<br>1-14 |
| A | JP 2001-322668 A (The Nippon Synthetic Chemical Industry Co., Ltd.),<br>20 November 2001 (20.11.2001),<br>entire text<br>& US 2002/0009596 A1 & EP 1158016 A2 | 1-15 |
| A | JP 5-507961 A (Penford Products Co.),<br>11 November 1993 (11.11.1993),<br>entire text<br>& US 5416181 A & WO 1992/013714 A1<br>& EP 818498 A2 & CN 1106835 A | 1-15 |
| A | WO 2015/098979 A1 (Kuraray Co., Ltd.),<br>02 July 2015 (02.07.2015),<br>entire text<br>& US 2016/0326285 A1 & EP 3088429 A1<br>& CN 106029714 A & TW 201533064 A | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007070493 A
- JP 2001206435 A
- JP H09324096 A
- JP 2002003896 A
- JP 3262406 B
- JP 3135066 B
- US 20130256182 A
- JP S5324351 A
- US 20040219297 A
- JP 2007254679 A
- JP 2013040279 A
- JP 5558357 B
- JP 2009256656 A
- WO 2008020556 A
- JP 2001278922 A